# NOUVEAU FASCICULE DE BREVET EUROPEEN

(11) **EP 0 861 582 B2**
(45) Date de publication et mention de la décision concernant l'opposition: **01.04.2009**
(45) Mention de la délivrance du brevet: 31.05.2006
(21) Numéro de dépôt: 98440021.8
(22) Date de dépôt: 10.02.1998
(51) Int. Cl.: A01D 34/66

(54) **Faucheuse**
Mähmaschine
Mowing-machine

(30) Priorité: 14.02.1997 FR 9701923
(43) Date de publication de la demande: 02.09.1998
(73) Titulaire: KUHN S.A., 67700 Saverne (FR)
(72) Inventeur: Wattron, Bernard, 67700 Haegen (FR); Walch, Martin, 67490 Dettwiller (FR)
(74) Mandataire: Andres, Jean-Claude

(56) Documents cités:
- EP-A- 0 068 560
- EP-A- 0 118 952
- EP-A- 0 245 186
- EP-A- 0 267 659
- EP-A- 0 297 012
- EP-A- 0 338 649
- EP-A- 0 642 731
- EP-A- 0 666 017
- DE-A- 3 145 337
- FR-A- 2 255 839
- US-A- 5 481 857

## Description

La présente invention se rapporte à une faucheuse du type défini dans le préambule de la revendication 1.

Une telle faucheuse est connue par le brevet européen EP 0 338 649. Cette faucheuse connue comporte une structure porteuse à laquelle est lié un mécanisme de coupe s'étendant, en position normale de travail, sensiblement horizontalement et transversalement à la direction d'avance.

Le mécanisme de coupe est lié à l'une de ses extrémités à la structure porteuse au moyen d'une liaison pivot d'axe longitudinal sensiblement horizontal et dirigé suivant la direction d'avance. A l'autre de ses extrémités, le mécanisme de coupe est lié à la structure porteuse au moyen d'une liaison comportant une plaque élastique laquelle s'étend sensiblement verticalement et parallèlement à la liaison pivot de manière à autoriser un mouvement relatif dudit mécanisme de coupe par rapport à la structure porteuse pour éviter de le soumettre à des contraintes mécaniques trop importantes notamment lors du travail et lors de l'assemblage de la faucheuse.

Cependant, cette faucheuse connue présente un certain nombre d'inconvénients.

Un premier inconvénient réside dans le fait que les vibrations qui émanent du mécanisme de coupe et de la structure porteuse sont préjudiciables au bon fonctionnement de la faucheuse. En effet, les vibrations de la structure porteuse sont partiellement transmises au mécanisme de coupe en passant par la liaison pivot et la plaque élastique, ce qui réduit considérablement la durée de vie dudit mécanisme de coupe.

Inversement, les vibrations et les chocs auxquels est soumis le mécanisme de coupe, se reportent sur la structure porteuse occasionnant ainsi une détérioration de cette dernière.

Le but de la présente invention est de remédier aux inconvénients de la faucheuse de l'art antérieur.

A cet effet, la faucheuse selon l'invention comporte les caractéristiques de la revendication 1.

Les vibrations du mécanisme de coupe et les vibrations de la structure porteuse équipant une telle faucheuse sont ainsi isolées et atténuées, ce qui permet de prolonger la durée de vie des différents éléments de la faucheuse, notamment des roulements, des pignons dentés, des soudures etc équipant cette dernière.

L'invention concerne également les caractéristiques suivantes :
- chaque liaison extrême liant le carter à la structure porteuse est située à proximité du sol ;
- chaque liaison extrême liant le carter à la structure porteuse est située derrière les organes de coupe compte tenu de la direction d'avance ;
- la (chaque) liaison supérieure liant un organe de coupe extrême à la structure porteuse est située au-dessus dudit organe de coupe extrême correspondant de manière à éviter que le mécanisme de coupe ne pivote autour des liaisons extrêmes ;
- la partie médiane du mécanisme de coupe est liée à la structure porteuse au moyen d'une liaison centrale comportant une bague élastique filtrant tout ou partie des vibrations entre le mécanisme de coupe et ladite structure porteuse, ladite liaison centrale permettant avantageusement de rigidifier ledit mécanisme de coupe pour éviter de le soumettre à des contraintes mécaniques, notamment de flexion, trop importantes lors du travail ;
- la liaison centrale est située au-dessus d'un organe de coupe médian s'étendant au moins sensiblement à mi-distance des organes de coupe extrêmes ;
- l'organe de coupe médian est entraîné en mouvement au moyen d'organes de transmission comportant un carter de renvoi agencé d'une part au-dessus dudit organe de coupe médian et lié d'autre part à la structure porteuse au moyen de la liaison centrale ;
- les organes de transmission comportent un boîtier de transmission lié à la structure porteuse et entraînant en mouvement le carter de renvoi au moyen d'un arbre de transmission intermédiaire empêchant la transmission de tout ou partie des vibrations entre ledit carter de renvoi et ledit boîtier de transmission ;
- l'arbre de transmission intermédiaire servant à transmettre le mouvement du boîtier de transmission au carter de renvoi autorise un mouvement relatif du mécanisme de coupe par rapport à la structure porteuse ;
- il est prévu un accouplement élastique empêchant la transmission de tout ou partie des vibrations entre le boîtier de transmission et le carter de renvoi ;
- chaque bague élastique appartenant à une liaison liant le mécanisme de coupe à la structure porteuse comporte un élément en caoutchouc isolant ledit mécanisme de coupe de ladite structure porteuse.

D'autres objets, caractéristiques et avantages de l'invention apparaissent dans la description suivante avec référence aux dessins annexés qui représentent, à titre d'exemple non limitatif, une forme de réalisation de la faucheuse selon l'invention.

Sur ces dessins :
- la figure 1 représente une vue de dessus d'une faucheuse sur laquelle ont été effectuées quelques coupes partielles ;
- la figure 2 est une vue de côté suivant la flèche II définie sur la figure 1;
- la figure 3 est une vue en coupe suivant le plan III défini sur la figure 2 ;
- la figure 4 est une vue en coupe partielle suivant le plan IV défini sur la figure 1.

Les différentes figures montrent une faucheuse (1) selon l'invention, réalisée selon l'exemple représenté, sous la forme d'une faucheuse-conditionneuse. Celle-ci est destinée à être attelée à un véhicule tracteur (non représenté) qui, durant l'utilisation, la tire dans la direction d'avance (2).

Dans la suite de la description, les notions suivantes : "avant", "arrière", "devant" et "derrière" sont définies par rapport à ce sens d'avance (2) et les notions "droite" et "gauche" sont définies en regardant la faucheuse (1) de l'arrière dans le sens d'avance (2).

Cette faucheuse (1) comporte dans les grandes lignes un châssis mobile (3), un timon (4), un mécanisme de récolte (5) et des organes de transmission (6).

Cette faucheuse (1) est, selon l'exemple représenté, destinée à travailler à droite et à gauche derrière le véhicule tracteur (non représenté). A cet effet le timon (4) est destiné à être lié à l'une de ses extrémités audit véhicule tracteur et à la partie médiane du châssis mobile (3) d'une manière connue par l'homme de l'art. Le châssis mobile (3) comporte à chacune de ses extrémités latérales une roue (7) au moyen desquelles il s'appuie sur le sol (S) et lesquelles permettent également de tirer la faucheuse (1) derrière le véhicule tracteur.

Le mécanisme de récolte (5) est lié au châssis mobile (3) au moyen d'un dispositif de suspension (8) connu par l'homme de l'art. Ce mécanisme de récolte (5) comporte, selon l'exemple représenté, une structure porteuse (9), un mécanisme de coupe (10) et un dispositif de conditionnement (11).

Le mécanisme de coupe (10) s'étend, en position normale de travail, sensiblement horizontalement et orthogonalement à la direction d'avance (2). Il comprend un carter (13) fermé de forme longitudinale auquel sont agencés des organes de coupe (14, 19, 19', 25) destinés chacun à tourner autour d'un axe de rotation (14a, 19a, 19a', 25a) respectif au moins sensiblement vertical.

Les axes de rotation (14a, 19a, 19a', 25a) sont disposés suivant une ligne (15) s'étendant sensiblement orthogonalement à la direction d'avance (2). On remarquera que chaque organe de coupe (14, 19, 19', 25) comporte un disque (16) aux extrémités duquel sont prévus des outils de coupe (17). Chaque organe de coupe extrême (19, 19'), situé respectivement à une extrémité latérale (21, 21') du carter (13), est en sus équipé d'une coiffe d'andainage (23, 23') fixée sur le disque (16) correspondant.

Un organe de coupe médian (25) s'étendant au niveau de la partie médiane (26) du mécanisme de coupe (10), schématisé par un plan vertical médian (28) situé à mi-distance des organes de coupes extrêmes (19, 19'), est également équipé d'une coiffe d'andainage (29) laquelle est fixée sur le disque (16) dudit organe de coupe médian (25).

Le mécanisme de coupe (10) est lié à la structure porteuse (9) au moyen de liaisons (30e, 30e', 30s, 30s', 30c) comportant chacune un dispositif (31) empêchant la transmission de tout ou partie des vibrations entre ledit mécanisme de coupe (10) et ladite structure porteuse (9) quelle que soit l'orientation desdites vibrations.

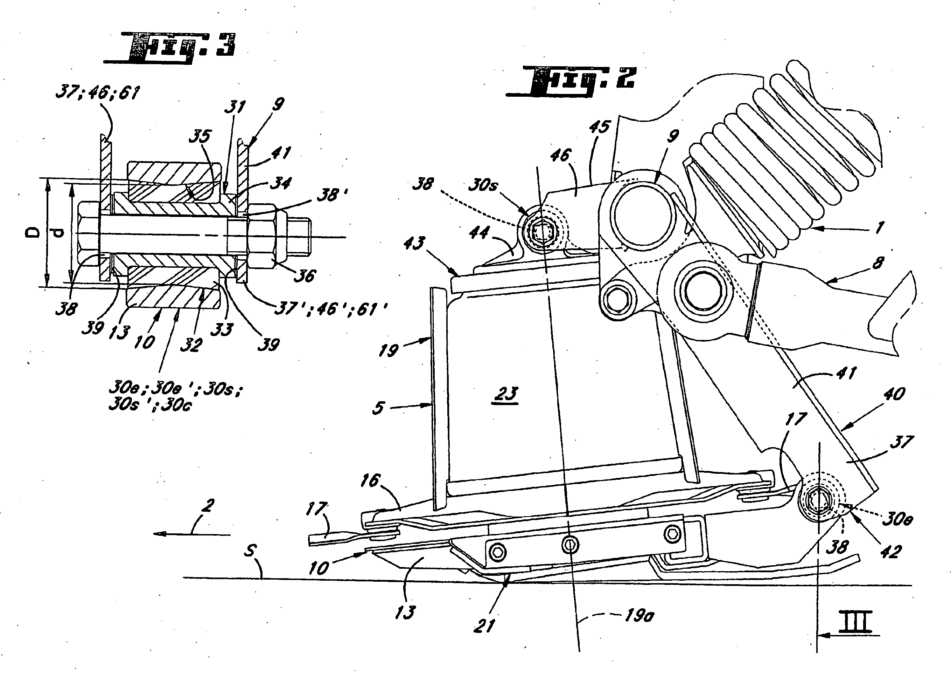

A cet effet, on voit à la lumière de la figure 3 que, chaque dispositif (3 1) empêchant la transmission de tout ou partie des vibrations comporte une bague élastique (32).

Cette bague élastique (32) comporte un élément flexible composé d'un élément en caoutchouc (33) au travers duquel s'étend une bague épaulée (34).

Selon l'exemple de réalisation représenté, l'élément en caoutchouc (33) s'étend à l'intérieur d'un alésage (35) prévu dans le mécanisme de coupe (10).

On notera que le diamètre central (d) situé au milieu de l'alésage (35) est inférieur aux diamètres latéraux (D) situés aux extrémités dudit alésage (35). En d'autres termes l'alésage (35) est de forme convexe de manière à favoriser un meilleur maintien axial de l'élément en caoutchouc (33) dans ledit alésage (35).

On notera encore que, lorsque la bague élastique (32) est déposée et s'étend en dehors de l'alésage (35), l'élément en caoutchouc (33) est diamétralement plus grand que les diamètres latéraux (D) dudit alésage (35).

La bague épaulée (34) est fixée à la structure porteuse (9) au moyen d'un boulon (36) s'étendant d'une part au travers de ladite bague épaulée (34) et traversant d'autre part, deux ailes (37, 37' ; 46, 46' ; 61, 61') appartenant à la structure porteuse (9).

A la lumière de la figure 3, on voit que les deux ailes (37, 37'; 46, 46' ; 61, 61') sont situées de part et d'autre de ladite bague épaulée (34) et que chaque aile (37, 37' ; 46, 46' ; 61, 61') comporte un trou oblong (38, 38') au travers duquel s'étend ledit boulon (36).

Le mécanisme de coupe (10) est calé transversalement sur la structure porteuse (9) au moyen de cales (39) situées entre les ailes (37, 37'; 46, 46' ; 61, 61') et la bague épaulée (34).

Ces trous oblongs (38, 38') et ces cales (39) permettent avantageusement le montage de la structure porteuse (9) sur le mécanisme de coupe (10) sans introduire de contraintes initiales dans la construction, même si ledit mécanisme de coupe (10) et/ou ladite structure porteuse (9) sont plus au moins déformés ou si leurs cotes sont aux limites extrêmes des tolérances de fabrication.

De telles liaisons (30e, 30e', 30s, 30s', 30c) liant le mécanisme de coupe (10) à la structure porteuse (9) par l'intermédiaire d'éléments en caoutchouc (33) permettent d'isoler ledit mécanisme de coupe (10) de ladite structure porteuse (9) ce qui permet avantageusement de filtrer tout ou partie des vibrations provenant dudit mécanisme de coupe (10) et/ou de ladite structure porteuse (9).

Une telle conception permet en sus d'amortir les chocs et les secousses auxquels est soumis le mécanisme de coupe (10) lors du travail.

Selon l'exemple de réalisation représenté, chaque extrémité latérale (21, 21') du carter (13) du mécanisme de coupe (10) est liée à la structure porteuse (9) au moyen d'une liaison (30e, 30e') extrême décrite précédemment. Chacune de ces liaisons (30e, 30e') extrêmes est située derrière l'organe de coupe extrême (19, 19') correspondant et en dehors de la surface balayée par les outils de coupe (17) dudit organe de coupe extrême (19, 19').

A la lumière de la figure 2, on voit en sus que chaque liaison (30e, 30e') est située à proximité du sol (S). A cet effet, la structure porteuse (9) comporte à chacune de ses extrémités latérales (40, 40') un bras (41, 41') qui s'étend vers l'arrière et vers le bas jusqu'au niveau de ladite liaison (30e, 30e') correspondante.

L'extrémité inférieure (42) de chaque bras (41, 41') comporte deux ailes (37, 37') permettant de fixer la bague épaulée (34) de la bague élastique (32) à ladite structure porteuse (9) tel que décrit précédemment.

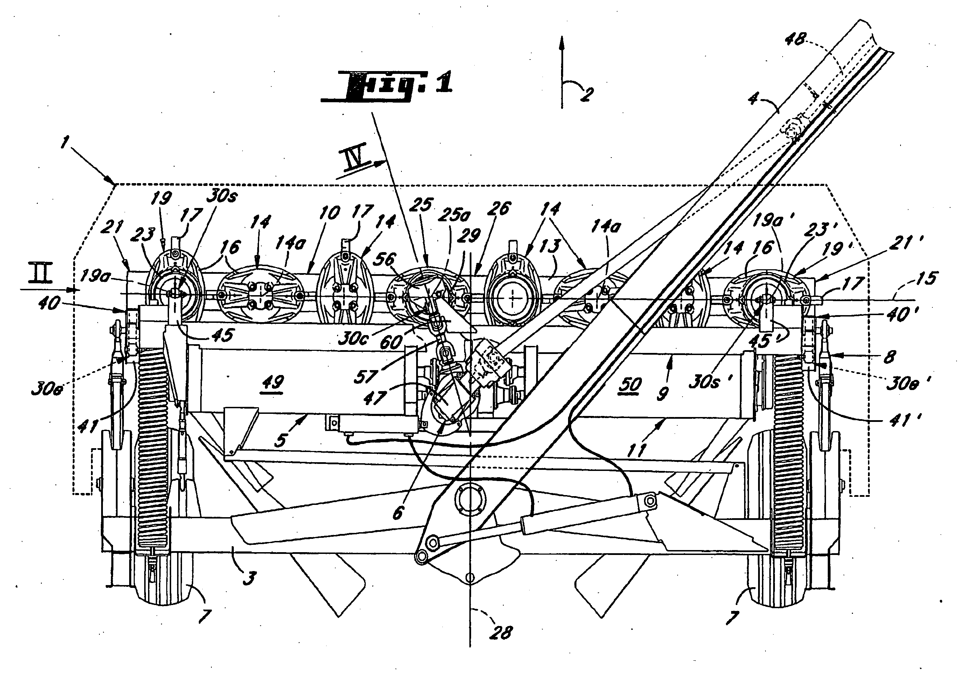

A la lumière des figures 1 et 2, on voit en outre que chaque organe de coupe extrême (19, 19') situé respectivement à une extrémité latérale (21, 21') du carter (13) est également lié à la structure porteuse (9) au moyen d'une liaison (30s, 30s') supérieure décrite précédemment. Chaque liaison (30s, 30s') supérieure est située au-dessus de l'organe de coupe extrême (19, 19') correspondant. A cet effet, la partie supérieure (43) de chaque coiffe d'andainage (23, 23') de l'organe de coupe extrême (19, 19') correspondant comporte un élément de liaison (44) lié à ladite coiffe d'andainage (23, 23') au moyen d'une articulation cylindrique (non représentée) d'axe longitudinal confondu avec l'axe de rotation (19a, 19a') correspondant.

La structure porteuse (9) comporte à chacune de ses extrémités latérales (40, 40') un autre bras (45, 45') sensiblement horizontal et s'étendant vers l'avant jusqu'à la liaison (30s, 30s') correspondante. Ces liaisons (30s, 30s') sont semblables aux liaisons (30e, 30e') décrites précédemment et ne seront par conséquent pas décrites plus en détail.

On notera toutefois que chaque bras (45, 45') comporte deux ailes (46, 46') comparables aux ailes (37, 37') du bras (41, 41') correspondant décrites précédemment.

Les organes de coupe (14, 19, 19', 25) sont destinés à être entraînés en rotation au moyen des organes de transmission (6) de la faucheuse (1).

A cet effet, les organes de transmission (6) comportent un boîtier de transmission (47) qui est lié à la structure porteuse (9) et qui reçoit le mouvement du véhicule tracteur (non représenté) au moyen d'une ligne d'arbres (48).

Selon l'exemple de réalisation représenté, le dispositif de conditionnement (11) est composé de deux unités de conditionnement (49, 50) entre lesquelles s'étend le boîtier de transmission (47).

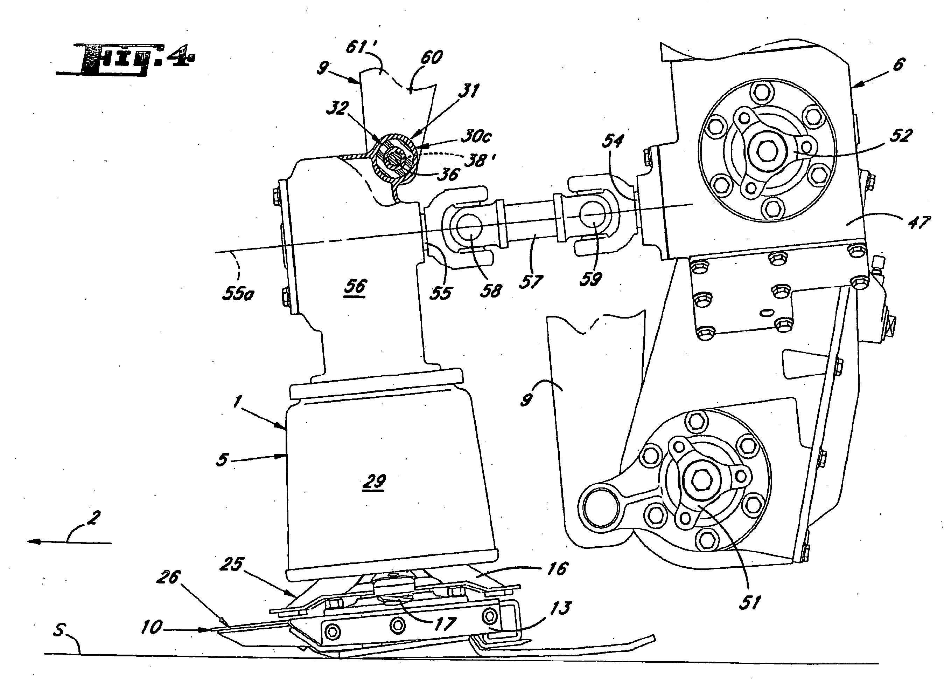

Chaque unité de conditionnement (49, 50) comporte deux organes de conditionnement (non représentés) connus par l'homme de l'art. A cet effet, on voit à la lumière de la figure 4 que le boîtier de transmission (47) comporte de chaque côté un premier arbre de sortie (51) et un deuxième arbre de sortie (52) entraînant chacun un organe de conditionnement d'une manière connue par l'homme de l'art. Le boîtier de transmission (47) comporte en sus un troisième arbre de sortie (54) entraînant un arbre d'entrée (55) d'un carter de renvoi (56) au moyen d'un arbre de transmission intermédiaire (57) s'étendant au moins sensiblement horizontalement vers l'avant. Le carter de renvoi (56) est agencé au-dessus de la coiffe d'andainage (29) de l'organe de coupe médian (25) et comporte un arbre de sortie (non représenté) s'étendant au moins sensiblement verticalement vers le bas et entraînant les différents organes de coupe (14, 19, 19', 25) du mécanisme de coupe (10) via le disque (16) dudit organe de coupe médian (25).

L'arbre de transmission intermédiaire (57) empêche d'une part la transmission de tout ou partie des vibrations entre ledit carter de renvoi (56) et ledit boîtier de transmission (47) et autorise d'autre part un mouvement relatif du mécanisme de coupe (10) par rapport à la structure porteuse (9). A cet effet, l'arbre de transmission intermédiaire (57) comporte, selon l'exemple représenté, deux joints universels (58, 59) et l'arbre d'entrée (55) du carter de renvoi (56) peut se déplacer quelque peu le long de son axe longitudinal (55A).

Le carter de renvoi (56) est lié à la structure porteuse (9) au moyen d'une liaison (30c) centrale décrite précédemment. Cette liaison (30c) centrale est située au-dessus de l'organe de coupe médian (25) et au moins sensiblement à mi-distance des organes de coupe extrêmes (19, 19').

A cet effet, la structure porteuse (9) comporte un bras central (60) s'étendant sensiblement verticalement vers le bas et étant situé au moins sensiblement dans le plan vertical médian (28).

Cette liaison (30c) est semblable aux liaisons (30e, 30e') décrites précédemment et ne sera par conséquent pas décrite plus en détail. On notera toutefois que le bras central (60) comporte deux ailes (61, 61') comparables aux ailes (37, 37') du bras (41, 41') correspondant décrites précédemment.

Finalement différentes modifications restent possibles notamment en ce qui concerne la constitution des divers éléments, sans pour autant sortir du domaine de protection défini dans les revendications.

Il est notamment parfaitement possible d'équiper l'arbre de transmission intermédiaire (57) d'un accouplement élastique comportant un élément élastique et empêchant en outre la transmission de tout ou partie des vibrations tortionnelles entre le carter de renvoi (56) et ledit boîtier de transmission (47).

Il est en sus également possible d'équiper chaque dispositif (31) empêchant la transmission de tout ou partie des vibrations entre le mécanisme de coupe (10) et la structure porteuse (9) d'une bague élastique pouvant également supporter des charges axiales importantes. Pour cela l'élément en caoutchouc d'une bague élastique pourra également prendre appui latéralement sur le mécanisme de coupe (10).

## Revendications

1. Faucheuse comportant :
- un mécanisme de coupe (10) comprenant un carter (13) supportant des organes de coupe (14, 19, 19', 25) tournant chacun autour d'un axe de rotation (14a, 19a, 19a', 25) respectif au moins sensiblement vertical lors du travail, et
- une structure porteuse (9) à laquelle est lié ledit mécanisme de coupe (10) au moyen de liaisons (30e, 30e', 30s, 30s', 30c) dont l'une au moins comporte un élément flexible,
chaque liaison (30e, 30e', 30s, 30s', 30c) liant ledit mécanisme de coupe (10) à ladite structure porteuse (9) comporte un dispositif (31) empêchant la transmission de tout ou partie des vibrations entre ledit mécanisme de coupe (10) et ladite structure porteuse (9),
***caractérisée en ce que*** ledit dispositif (31) empêchant la transmission de tout ou partie des vibrations entre ledit mécanisme de coupe (10) et ladite structure porteuse (9) comporte une bague élastique (32), *que* chaque extrémité latérale (21, 21') du carter (13) du mécanisme de coupe (10) est liée directement ou indirectement à la structure porteuse (9) au moyen d'une liaison extrême (30e, 30e') avec un dispositif (31) comportant une bague élastique (32) *et que* le mécanisme de coupe (10) comporte deux organes de coupe extrêmes (19,19') dont l'un au moins est lié à la structure porteuse (9) au moyen d'une liaison supérieure (30s, 30s') avec un dispositif (31) comportant une bague élastique (32).

2. Faucheuse selon la revendication 1, ***caractérisée en ce que*** chaque liaison extrême (30e, 30e') liant le carter (13) à la structure porteuse (9) est située à proximité du sol (S).

3. Faucheuse selon la revendication 1 ou 2, ***caractérisée en ce que*** chaque liaison extrême (30e, 30e') liant le carter (13) à la structure porteuse (9) est située derrière les organes de coupe (14, 19, 19', 25) compte tenu de la direction d'avance (2).

4. Faucheuse selon la revendication 1, ***caractérisée en ce que*** la ou chaque liaison supérieure (30s, 30s') liant un organe de coupe extrême (19, 19') à la structure porteuse (9) est située au-dessus dudit organe de coupe extrême (19, 19') correspondant.

5. Faucheuse selon l'une quelconque des revendications 1 à 4, ***caractérisée en ce que*** la partie médiane (26) du mécanisme de coupe (10) est liée à la structure porteuse (9) au moyen d'une liaison centrale (30c) comportant une bague élastique (32).

6. Faucheuse selon la revendication 5, ***caractérisée en ce que*** la liaison centrale (30c) est située au-dessus d'un organe de coupe médian (25) s'étendant au moins sensiblement à mi-distance des organes de coupe extrêmes (19, 19').

7. Faucheuse selon la revendication 6, ***caractérisée en ce que*** l'organe de coupe médian (25) est entraîné en mouvement au moyen d'organes de transmission (6) comportant un carter de renvoi (56) agencé d'une part au-dessus dudit organe de coupe médian (25) et lié d'autre part à la structure porteuse (9) au moyen de la liaison centrale (30c).

8. Faucheuse selon la revendication 7, ***caractérisée en ce que*** les organes de transmission (6) comportent un boîtier de transmission (47) lié à la structure porteuse (9) et entraînant en mouvement le carter de renvoi (56) au moyen d'un arbre de transmission intermédiaire (57) empêchant la transmission de tout ou partie des vibrations entre ledit carter de renvoi (56) et ledit boîtier de transmission (47).

9. Faucheuse selon la revendication 8, ***caractérisée en ce que*** l'arbre de transmission intermédiaire (57) servant à transmettre le mouvement du boîtier de transmission (47) au carter de renvoi (56) autorise un mouvement relatif du mécanisme de coupe (10) par rapport à la structure porteuse (9).

10. Faucheuse selon la revendication 8 ou 9, ***caractérisée en ce qu'**il* est prévu un accouplement élastique empêchant la transmission de tout ou partie des vibrations entre le boîtier de transmission (47) et le carter de renvoi (56).

11. Faucheuse selon l'une quelconque des revendications 1 à 10, ***caractérisée en ce que*** chaque bague élastique (32) appartenant à une liaison (30e, 30e', 30s, 30s', 30c) liant le mécanisme de coupe (10) à la structure porteuse (9) comporte un élément en caoutchouc (33) isolant ledit mécanisme de coupe (10) de ladite structure porteuse (9).

## Claims

1. Mower comprising:
- a cutting mechanism (10) comprising a gearbox (13) carrying cutting elements (14, 19, 19', 25) each rotating about a respective axis of rotation (14a, 19a, 19a', 25) which is at least substantially vertical during work, and
- a carrying structure (9) to which the said cutting mechanism (10) is connected by means of connections (30e, 30e', 30s, 30s', 30c), at least one of which has a flexible element,
each connection (30e, 30e', 30s, 30s', 30c) connecting the said cutting mechanism (10) to the said carrying structure (9) comprising a device (31) preventing all or some of the vibrations from being transmitted between the said cutting mechanism (10) and the said carrying structure (9),
***characterized in* that** the said device (31) preventing all or some of the vibrations from being transmitted between the said cutting mechanism (10) and the said carrying structure (9) includes an elastic ring (32), ***in* that** each lateral end (21, 21') of the gearbox (13) of the cutting mechanism (10) is connected directly or indirectly to the carrying structure (9) by means of an end connection (30e, 30e') with a device (31) including an elastic ring (32) *and* ***in* that** the cutting mechanism (10) comprises two end cutting elements (19, 19'), at least one of which is connected to the carrying structure (9) by means of an upper connection (30s, 30s') with a device (31) including an elastic ring (32).

2. Mower according to Claim 1, ***characterized in* that** each end connection (30e, 30e') connecting the gearbox (13) to the carrying structure (9) is situated close to the ground (S).

3. Mower according to Claim 1 or 2, ***characterized in* that** each end connection (30e, 30e') connecting the gearbox (13) to the carrying structure (9) is situated behind the cutting elements (14, 19, 19', 25) when considering the direction of the forward travel (2).

4. Mower according to Claim 1, ***characterized in* that** the or each upper connection (30s, 30s') connecting an end cutting element (19, 19') to the carrying structure (9) is situated above the said corresponding end cutting element (19, 19').

5. Mower according to any one of Claims 1 to 4, ***characterized in* that** the middle part (26) of the cutting mechanism (10) is connected to the carrying structure (9) by means of a central connection (30c) including an elastic ring (32).

6. Mower according to Claim 5, ***characterized in* that** the central connection (30c) is situated above a middle cutting element (25) which extends at least substantially midway of the end cutting elements (19, 19').

7. Mower according to Claim 6, ***characterized in* that** the middle cutting element (25) is driven in motion by means of transmission elements (6) including a transmission gearbox (56) arranged, on the one hand, above the said middle cutting element (25) and connected, on the other hand, to the carrying structure (9) by means of the central connection (30c).

8. Mower according to Claim 7, ***characterized in* that** the transmission elements (6) include a transmission box (47) connected to the carrying structure (9) and driving the transmission gearbox (56) in motion by means of an intermediate transmission shaft (57) preventing all or some of the vibrations from being transmitted between the said transmission gearbox (56) and the said transmission box (47).

9. Mower according to Claim 8, ***characterized in* that** the intermediate transmission shaft (57) which is used to transmit the motion of the transmission box (47) to the transmission gearbox (56) allows a relative movement of the cutting mechanism (10) with respect to the carrying structure (9).

10. Mower according to Claim 8 or 9, ***characterized in* that** an elastic coupling is provided preventing all or some of the vibrations from being transmitted between the transmission box (47) and the transmission gearbox (56).

11. Mower according to any one of Claims 1 to 10, ***characterized in* that** each elastic ring (32) belonging to a connection (30e, 30e', 30s, 30s', 30c) connecting the cutting mechanism (10) to the carrying structure (9) includes a rubber element (33) isolating the said cutting mechanism (10) from the said carrying structure (9).

## Patentansprüche

1. Mähmaschine mit
- einem Schneidmechanismus (10), der ein Gehäuse (13) umfasst, welches Schneidelemente (14, 19, 19', 25) trägt, die sich bei der Arbeit jeweils um eine zumindest im Wesentlichen vertikale jeweilige Drehachse (14a, 19a, 19a', 25) drehen, und
- einer Tragestruktur (9), mit der der Schneidmechanismus (10) mit Hilfe von Verbindungen (30e, 30e', 30s, 30s', 30c) verbunden ist, von denen eine mindestens ein biegsames Element umfasst,
wobei jede Verbindung (30e, 30e', 30s, 30s', 30c), die den Schneidmechanismus (10) mit der Tragestruktur (9) verbindet eine Vorrichtung (31) umfasst, die die Übertragung der Gesamtheit oder eines Teils der Vibrationen zwischen dem Schneidmechanismus (10) und der Tragestruktur (9) verhindert,
***dadurch gekennzeichnet,* dass** die Vorrichtung (31), die die Übertragung der Gesamtheit oder eines Teils der Vibrationen zwischen dem Schneidmechanismus (10) und der Tragestruktur (9) verhindert, einen elastischen Ring (32) umfasst, dass jedes seitliche Ende (21, 21') des Gehäuses (13) des Schneidmechanismus (10) direkt oder indirekt mit der Tragestruktur (9) mit Hilfe einer äußeren Verbindung (30e, 30e'), die eine Vorrichtung (31) mit einem elastischem Ring (32) umfasst, verbunden ist *und* dass der Schneidmechanismus (10) zwei äußere Schneidelemente (19, 19') umfasst, von denen mindestens eines mit der Tragestruktur (9) mit Hilfe einer oberen Verbindung (30s, 30s'), die eine Vorrichtung (31) mit einem elastischen Ring (32) umfasst, verbunden ist.

2. Mähmaschine nach Anspruch 1, ***dadurch gekennzeichnet,* dass** jede äußere Verbindung (30e, 30e'), die das Gehäuse (13) mit der Tragestruktur (9) verbindet, in der Nähe des Bodens (S) angeordnet ist.

3. Mähmaschine nach Anspruch 1 oder 2, ***dadurch gekennzeichnet,* dass** jede äußere Verbindung (30e, 30e'), die das Gehäuse (13) mit der Tragestruktur (9) verbindet, hinter den Schneidelementen (14, 19, 19', 25) unter Berücksichtigung der Vorschubrichtung (2) angeordnet ist.

4. Mähmaschine nach Anspruch 1, ***dadurch gekennzeichnet,* dass** die oder jede obere Verbindung (30s, 30s'), die ein äußeres Schneidelement (19, 19') mit der Tragestruktur (9) verbindet, über dem entsprechenden äußeren Schneidelement (19, 19') angeordnet ist.

5. Mähmaschine nach irgend einem der Ansprüche 1 bis 4, ***dadurch gekennzeichnet,* dass** der Mittelteil (26) des Schneidmechanismus (10) mit der Tragestruktur (9) mit Hilfe einer zentralen Verbindung (30c), die ein elastischer Ring (32) umfasst, verbunden ist.

6. Mähmaschine nach Anspruch 5, ***dadurch gekennzeichnet,* dass** sich die zentrale Verbindung (30c) über einem mittleren Schneidelement (25) befindet, das sich mindestens im Wesentlichen auf halbem Abstand zu den äußeren Schneidelementen (19, 19') befindet.

7. Mähmaschine nach Anspruch 6, ***dadurch gekennzeichnet,* dass** das mittlere Schneidelement (25) mit Hilfe von Übertragungselementen (6) in Bewegung angetrieben wird, die ein Getriebegehäuse (56) umfassen, das einerseits über dem mittleren Schneidelement (25) angeordnet und andererseits mit der Tragestruktur (9) mit Hilfe der zentralen Verbindung (30c) verbunden ist.

8. Mähmaschine nach Anspruch 7, ***dadurch gekennzeichnet,* dass** die Übertragungselemente (6) ein Übertragungsgehäuse (47) umfassen, das mit der Tragestruktur (9) verbunden ist und das Getriebegehäuse (56) mit Hilfe einer Zwischenübertragungswelle (57), die die Übertragung der Gesamtheit oder eines Teils der Vibrationen zwischen dem Getriebegehäuse (56) und dem Übertragungsgehäuse (47) verhindert, in Bewegung antreibt.

9. Mähmaschine nach Anspruch 8, ***dadurch gekennzeichnet,* dass** die Zwischenübertragungswelle (57), die dazu dient, die Bewegung vom Übertragungsgehäuse (47) auf das Getriebegehäuse (56) zu übertragen, eine relative Bewegung des Schneidmechanismus (10) in Bezug auf die Tragestruktur (9) gestattet.

10. Mähmaschine nach Anspruch 8 oder 9, ***dadurch gekennzeichnet,* dass** eine elastische Kupplung vorgesehen ist, die die Übertragung der Gesamtheit oder eines Teils der Vibrationen zwischen dem Übertragungsgehäuse (47) und dem Getriebegehäuse (56) verhindert.

11. Mähmaschine nach irgend einem der Ansprüche 1 bis 10, ***dadurch gekennzeichnet,* dass** jeder elastische Ring (32), der einer Verbindung (30e, 30e', 30s, 30s', 30c) angehört, die den Schneidmechanismus (10) mit der Tragestruktur (9) verbindet, ein Element (33) aus Gummi umfasst, das den Scheidmechanismus (10) von der Tragestruktur (9) isoliert.
